# EUROPÄISCHE PATENTSCHRIFT

(11) **EP 1 772 657 B1**
(45) Veröffentlichungstag und Bekanntmachung des Hinweises auf die Patenterteilung: **16.06.2010**
(21) Anmeldenummer: 06019976.7
(22) Anmeldetag: 25.09.2006
(51) Int. Cl.: F16L 9/00

(54) **Rohranordnung**
Pipe arrangement
Arrangement de tubes

(30) Priorität: 06.10.2005 DE 20515714 U
(43) Veröffentlichungstag der Anmeldung: 11.04.2007
(73) Patentinhaber: REHAU AG + Co, 95111 Rehau (DE)
(72) Erfinder: Kania, Guido, 91080 Marloffstein (DE); Hendel, Roland, 91086 Aurachtal (DE)

(56) Entgegenhaltungen:
- EP-A- 0 010 835
- WO-A-99/57182
- DE-U1-202004 017 158
- GB-A- 1 517 344
- US-B1- 6 746 724

## Beschreibung

Die Erfindung betrifft eine Rohranordnung zur Durchführung von Fluiden und/oder gasförmigen Medien, wobei die Rohranordnung aus wenigstens einer das Lumen umschließenden Schicht besteht.

Derartige Rohranordnungen sind aus dem Stand der Technik als Rohre bekannt und werden beispielsweise zur Durchleitung von Fluiden wie Regenwasser, Abwasser und dergleichen verwendet, aber auch zur Durchleitung von gasförmigen Medien als beispielsweise Lüftungsrohre.
Diese Rohre werden in den verschiedensten Farben als Einschicht- bzw. Mehrschichtrohre eingesetzt, wobei auf den Rohren an deren Außenseiten Signierungen aufgebracht sind. Diese Signierungen beinhalten in aller Regel den Namen des Herstellers, den Werkstoff, aus dem die Rohre bestehen, bestimmte durch Normen bzw. Gesetze geforderte Daten sowie die Verwendung bzw. das Herstellungsdatum.

Nachteilig bei diesen Rohranordnungen hat sich herausgestellt, dass eine Kennzeichnung auf der Außenseite nach dem Verlegen der bspw. Rohre im Erdreich nicht mehr einsehbar bzw. kontrollierbar sind.
Dies ist insbesondere nachteilig, wenn an bestehende, bereits verlegte Rohrsysteme zusätzliche Anschlüsse installiert werden müssen bzw. wenn in bereits verlegte Rohrsysteme zusätzliche Fluide und/oder gasförmige Medien einzuleiten sind.
Die bestehenden Kanalnetzpläne der Kommunen, der Gemeinden bzw. der Städte bieten hier keine vollständigen Informationen, so dass beispielsweise beim Bau von neuen Straßen bzw. Parkplätzen die Anschlüsse an bestehenden Rohrsystemen nur durch Aufgraben der bereits verlegten Rohranordnungen revisionssicher ermittelbar sind.
Ein weiterer Nachteil der Rohranordnungen des bekannten Standes der Technik liegt darin, dass eine Überwachung des abgeschlossenen Bauvorhabens durch den Bauherren bezüglich der ausgeschriebenen und der wirklich installierten Rohranordnungen nach der Zuschüttung nicht mehr möglich ist.

Ein weiterer Nachteil ergibt sich beispielsweise bei Schäden bzw. Reklamationen, da hier nur aufwendige zeit- und kostenintensive Aufgrabungsarbeiten erforderlich sind, um das verlegte Rohrsystem zu identifizieren.

Identifikationsvorrichtungen sind aus DE 20 2004 017 158 U, EP 0010835 A, US 674 6 724 B, GB 1517 344 oder WO 99/57182 A bekannt.

Hier setzt die Erfindung ein, die es sich zur Aufgabe gestellt hat, die Nachteile des bekannten Standes der Technik zu überwinden und eine Rohranordnung aufzuzeigen, welches kostengünstig bzw. wirtschaftlich herstellbar und verlegbar ist, und welches im eingebauten Zustand durch geeignete technische Maßnahmen identifizierbar ist.

Erfindungsgemäß wird diese Aufgabe durch die kennzeichnenden Merkmale des Anspruches 1 gelöst. Weitere vorteilhafte Ausgestaltungen sind in den Unteransprüchen beschrieben.

Es wurde erfindungsgemäß erkannt, dass die bisher übliche Signierung der Außenseite der Rohranordnung sicherlich fertigungsbedingt sehr einfach ist, aber bei insbesondere erdverlegten Rohranordnungen später nur sehr aufwändig wieder rekapitulierbar ist.

Die Erfindung schlägt vor, dass die Rohranordnung wenigstens ein aus dem Lumen heraus nachweisbares Identifikationselement aufweist, wobei dieses Identifikationselement an der in das Lumen des Rohres weisenden Oberfläche angeordnet ist. Somit lassen sich vorteilhafterweise, insbesondere bei erdverlegten Rohranordnungen, durch in die Rohranordnung einbringbare Kontrollapparate wie beispielsweise Kameras für die Rohrinspektionen, die sehr schnell die an der Oberfläche der inneren Schicht der Rohranordnung aufgebrachte Identifizierungselemente ermitteln und die Daten über an sich bekannte elektrische Elemente dem jeweiligen Bauträger zur Verfügung stellen.
Es hat sich als vorteilhaft herausgestellt, dass das Identifikationselement an der Innenseite der Rohranorndung als Beschichtung ausgebildet ist, so dass an sich bekannte Verfahren wie die INKJET-Bedruckung bzw. der Digitaldruck, kostengünstig nutzbar sind, um derart erfindungsgemäße Rohranordnungen herzustellen.

In einem weiteren Ausführungsbeispiel ist das Identifikationselement als Prägung ausgebildet, welche ebenfalls vorteilhafterweise im Herstellungsprozess an der in das Lumen der Rohranordnung weisenden Oberfläche aufgebracht werden kann.

In einer ebenfalls vorteilhaften Ausführungsform der erfindungsgemäßen Rohranordnung ist das Identifikationselement als Speicherelement ausgebildet, welches beispielsweise in Form eines RFID-Chips ausgebildet ist. Somit lassen sich vorteilhafterweise umfangreiche Daten zu der verlegten Rohranordnung auch ohne den Einsatz von in die Rohranordnung einzubringenden Kontrollelementen abrufen.

Weiterhin vorteilhaft wird gesehen, dass das Identifikationselement als Strichcode ausgebildet ist, welcher beispielsweise über eine Lasersignierung durch im Material der Rohranordnung eingebrachte Zusatzstoffe kostengünstig in der Fertigung aktivierbar ist.
In einer weiteren vorteilhaften Ausführung ist das Identifikationselement in Form einer radial angeordneten Beschichtung bzw. Signierung am inneren Umfang der Rohranordnung, vorteilhafterweise am jeweiligen sog. Spitzende angeordnet, so dass selbst bei der Bildung einer Sielhaut in einer abwasserführenden Rohranordnung alle wichtigen Informationen über eine Kamerainspektion abrufbar und auch über eine längere Nutzungsdauer haltbar sind.

Es konnte weiterhin vorteilhaft festgestellt werden, dass das Identifikationselement eine von der restlichen Schicht des Rohres abweichende Färbung aufweist, wobei dieses Identifikationselement je nach den Anforderungen der Rohranordnung resistent gegen die umgebenden Fluide und/oder gasförmigen Medien ist und auch über einen langen Zeitraum von mehreren Jahren immer noch gut lesbar ist.

Mit der erfindungsgemäßen Rohranordnung ist es somit möglich, sowohl Verwechslungen bei der Herstellung als auch bei der Lieferung und Montage der erfindungsgemäßen Rohranordnung von vorneherein zu vermeiden.
Ein weiterer entscheidender Vorteil der erfindungsgemäßen Rohranordnung besteht darin, dass den Planern und Auftraggebern derartiger Rohranordnungen die Möglichkeit gegeben wird, die geplanten und ausgeschriebenen mit den wirklich verbauten Rohranordnungen zu vergleichen, um so zu vermeiden, dass möglicherweise falsch dimensionierte bzw. falsch gelieferte Rohranordnungen verbaut und kostenaufwändig wieder ersetzt werden müssen.

In einer weiteren vorteilhaften Ausgestaltung der Erfindung ist das Identifikationselement einstückig mit der Schicht der Rohranordnung verbunden, so dass die Lebensdauer derartiger Identifikationselemente mit der der verbauten Rohranordnungen identisch ist und diese Identifikationselemente keinerlei zusätzlicher Wartung oder Instandhaltung bedürfen.

Mit der erfindungsgemäßen Rohranordnung ist es erstmals möglich, bei insbesondere erdverlegten Rohranordnungen auch nach deren Verlegung bzw. Jahre später die wichtigen Informationen wie der Name des Herstellers, der Werkstoff, die Art des Rohres, die Steifigkeitsklasse, das Herstellungsdatum und dergleichen über eine einfache an sich bekannte und regelmäßig durchzuführende Kamerainspektion oder insbesondere bei Verwendung von Speicherelementen über geeignete Scanner bzw. über Funk nutzbare Empfangsgeräte zu ermöglichen.

Die Erfindung soll nun an einem diese nicht beschränkenden Ausführungsbeispielen beschrieben werden.

Es zeigen:
- Figur 1: Erfindungsgemäßes Rohrsystem als Rohranordnung
- Figur 2: Erfindungsgemäßes Rohrsystem als Rohrformteil

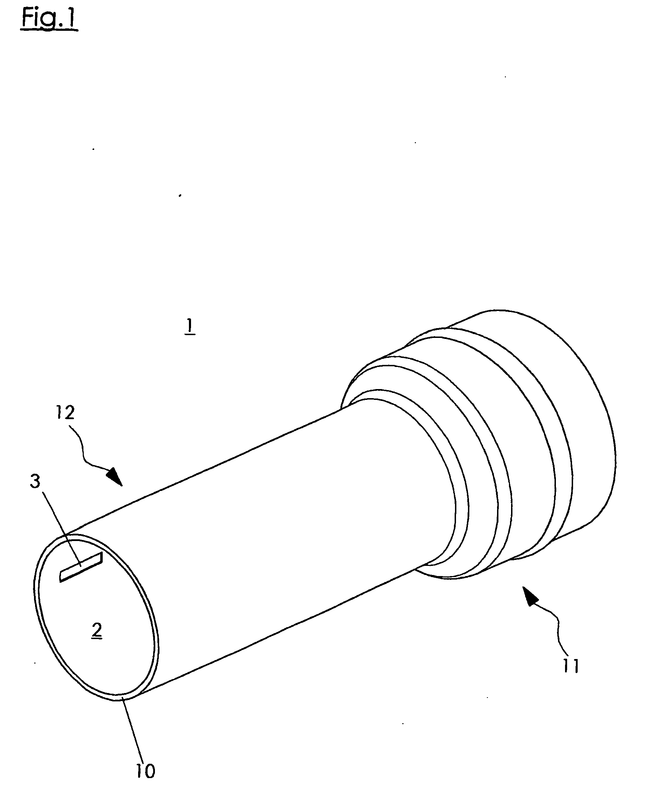

In Figur 1 ist eine Rohranordnung 1 dargestellt, welche als an sich bekanntes Rohr ausgebildet ist. An seinem einen freien Ende weist die Rohranordnung eine Muffe 11 auf. An dem der Muffe 11 der Rohranordnung 1 gegenüberliegenden freien Ende ist das sog. Spitzende 12 angeordnet, welches so dimensioniert ist, dass es in eine weitere Muffe 11 einer hier nicht dargestellten Rohranordnung 1 einführbar ist. Die Rohranordnung 1 in diesem Ausführungsbeispiel besteht aus einer Schicht 10, welche beispielsweise aus einem thermoplastisch verarbeitbaren Werkstoff herstellbar ist. Es liegt jedoch auch im Rahmen der Erfindung, dass die Rohranordnung aus mehreren Schichten besteht. Im Lumen 2 der Rohranordnung 1 im Bereich des Spitzendes 12 sind Identifikationselemente 3 angeordnet. Diese Identifikationselemente 3 sind in diesem Ausführungsbeispiel als Beschichtung, insbesondere als INKJET-Signierung, ausgebildet.

Nach der Verlegung derartiger Rohranordnungen 1, insbesondere im Erdreich, ist es bei einer durch das Lumen 2 der Rohranordnung 1 durchzuführenden Kamerainspektion jederzeit möglich, ein Identifikationselement 3 zu orten und die dort aufgebrachten Informationen abzurufen.
Das Identifikationselement 3 kann mit einer zusätzlichen Schutzschicht versehen sein, die resistent gegen die durch das Lumen 2 der Rohranordnung 1 geführten Fluide und/oder gasförmige Medien ist.

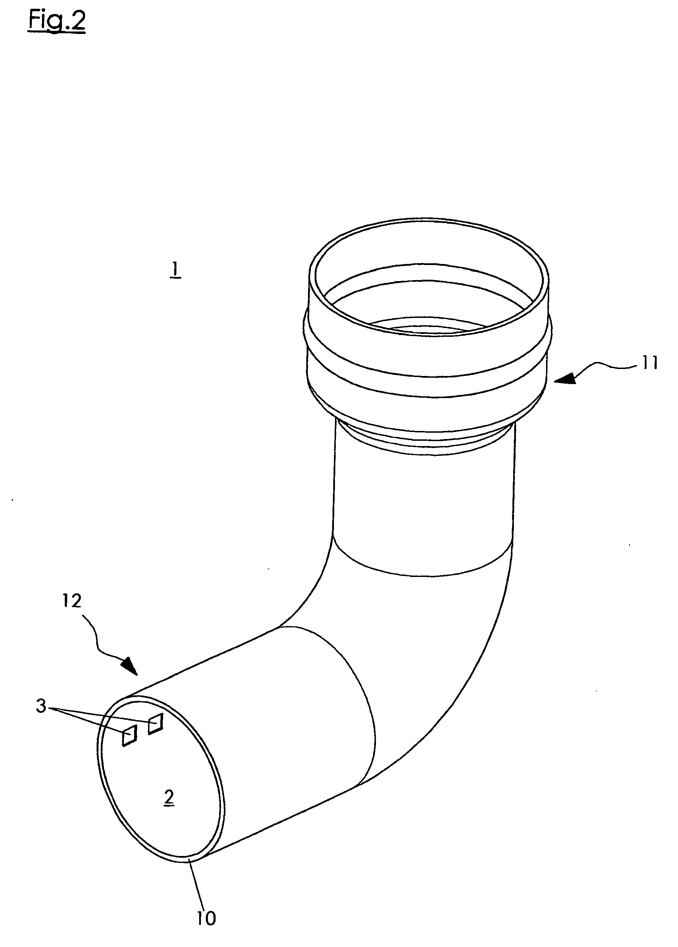

In Figur 2 ist ein erfindungsgemäßes Rohranordnung 1 dargestellt, welche als Rohrformteil bzw. Bogen ausgebildet ist. Dieses aus einer Schicht 10 bestehende Rohrformteil weist an seinem einen freie Ende eine Muffe 11 auf, welche in einem definierten Winkel zum Spitzende 12 angeordnet ist. Am Spitzende 12 des Rohrformteiles ist an der in das Lumen 2 des Rohrformteils weisenden Oberfläche der Schicht 10 ein Identifikationselement 3 angeordnet, welches in diesem Ausführungsbeispiel einstückig mit der Schicht des Rohrformteiles verbunden ist und eine von der Schicht 10 der Rohranordnung 1 abweichende Färbung aufweist.
Von dem Identifikationselement 3 beabstandet angeordnet ist ein weiteres Identifikationselement 3, welches in diesem Ausführungsbeispiel als RFID-Chip ausgebildet ist. Bei diesem Rohrformteil ist es somit möglich, im Rahmen einer Kamerainspektion die erforderlichen Informationen zur verlegten Rohranordnung 1 abzurufen, wobei dies aber ebenfalls möglich ist, über an sich bekannte Scanner und Kontrollelemente über Funk zu dem zweiten Identifikationselement 3, welches als RFID-Chip ausgebildet ist.

## Patentansprüche

1. Rohranordnung zur Durchführung von Fluiden und/oder gasförmigen Medien, wobei die Rohranordnung aus wenigstens einer das Lumen umschließenden Schicht besteht, wobei die Rohranordnung (1) mehrere aus dem Lumen (2) nachweisbare Identifikationselemente (3) aufweist, die an der in das Lumen (2) der Rohranordnung (1) weisenden Oberfläche der Schicht (10) angeordnet sind, und wobei die Rohranordnung ferner ein Spitzende aufweist, **dadurch gekennzeichnet, dass** die Identifikationselemente an dem Spitzende diametral gegenüberliegend an der Oberfläche angeordnet sind.

2. Rohranordnung nach Anspruch 1, **dadurch gekennzeichnet, dass** die !dentifikationselemente (3) in der Schicht (10) der Rohranordnung (1) angeordnet sind.

3. Rohranordnung nach einem der vorhergehenden Ansprüche, **dadurch gekennzeichnet, dass** die Identifikationselemente (3) als Beschichtung ausgebildet sind.

4. Rohranordnung nach einem der vorhergehenden Ansprüche, **dadurch gekennzeichnet, dass** die Identifikationselemente (3) als Prägung ausgebindet sind.

5. Rohranordnung nach einem der vorhergehenden Ansprüche, **dadurch gekennzeichnet, dass** die Identifikationselemente (3) als Speicherelement ausgebildet sind.

6. Rohranordnung nach einem der vorhergehenden Ansprüche, **dadurch gekennzeichnet, dass** die Identifikationselemente (3) als Strichcode ausgebildet sind.

7. Rohranordnung nach einem der vorhergehenden Ansprüche, **dadurch gekennzeichnet, dass** die Identifikationselemente (3) eine von der Schicht (10) der Rohranordnung (1) abweichende Färbung aufweisen.

8. Rohranordnung nach einem der vorhergehenden Ansprüche, **dadurch gekennzeichnet, dass** die Identifikationselemente (3) einstückig mit der Schicht (10) der Rohranordnung (1) verbunden sind.

9. Rohranordnung nach einem der vorhergehenden Ansprüche, **dadurch gekennzeichnet, dass** die Identifikationselemente (3) mit der Schicht (10) der Rohranordnung (1) verklebt sind.

10. Rohranordnung nach einem der vorhergehenden Ansprüche, **dadurch gekennzeichnet, dass** die Rohranordnung (1) als Rohr ausgebildet ist.

11. Rohranordnung nach einem der vorhergehenden Ansprüche, **dadurch gekennzeichnet, dass** die Rohranordnung (1) als Rohrformteil ausgebildet ist.

12. Rohranordnung nach einem der vorhergehenden Ansprüche, **dadurch gekennzeichnet, dass** die Rohranordnung (1) als Schachtbauteil ausgebildet ist.

## Claims

1. Pipe arrangement for carrying fluids and/or gaseous media, wherein the pipe arrangement consists of at least one layer which surrounds the lumen, wherein the pipe arrangement (1) has a plurality of identification elements (3) which can be traced from the lumen (2) and are arranged on that surface of the layer (10) which points into the lumen (2) of the pipe arrangement (1), and wherein the pipe arrangement furthermore has a spigot, **characterized in that** the identification elements on the spigot are arranged diametrically opposite one another on the surface.

2. Pipe arrangement according to Claim 1, **characterized in that** the identification elements (3) are arranged in the layer (10) of the pipe arrangement (1).

3. Pipe arrangement according to either of the preceding claims, **characterized in that** the identification elements (3) are in the form of a coating.

4. Pipe arrangement according to one of the preceding claims, **characterized in that** the identification elements (3) are in the form of an indentation.

5. Pipe arrangement according to one of the preceding claims, **characterized in that** the identification elements (3) are in the form of a memory element.

6. Pipe arrangement according to one of the preceding claims, **characterized in that** the identification elements (3) are in the form of a bar code.

7. Pipe arrangement according to one of the preceding claims, **characterized in that** the identification elements (3) have a colour which differs from that of the layer (10) of the pipe arrangement (1).

8. Pipe arrangement according to one of the preceding claims, **characterized in that** the identification elements (3) are integrally connected to the layer (10) of the pipe arrangement (1).

9. Pipe arrangement according to one of the preceding claims, **characterized in that** the identification elements (3) are adhesively bonded to the layer (10) of the pipe arrangement (1).

10. Pipe arrangement according to one of the preceding claims, **characterized in that** the pipe arrangement (1) is in the form of a pipe.

11. Pipe arrangement according to one of the preceding claims, **characterized in that** the pipe arrangement (1) is in the form of a shaped pipe part.

12. Pipe arrangement according to one of the preceding claims, **characterized in that** the pipe arrangement (1) is in the form of a shaft component.

## Revendications

1. Agencement de tube pour le passage de fluides et/ou de milieux gazeux, l'agencement de tube se composant d'au moins une couche entourant la lumière, l'agencement de tube (1) présentant plusieurs éléments d'identification (3) pouvant être mis en évidence depuis la lumière (2), qui sont disposés sur la surface de la couche (10) orientée à l'intérieur de la lumière (2) de l'agencement de tube (1), l'agencement de tube présentant en outre une extrémité pointue, **caractérisé en ce que** les éléments d'identification sont disposés au niveau de l'extrémité pointue de manière diamétralement opposée sur la surface.

2. Agencement de tube selon la revendication 1, **caractérisé en ce que** les éléments d'identification (3) sont disposés dans la couche (10) de l'agencement de tube (1).

3. Agencement de tube selon l'une quelconque des revendications précédentes, **caractérisé en ce que** les éléments d'identification (3) sont réalisés sous forme de revêtement.

4. Agencement de tube selon l'une quelconque des revendications précédentes, **caractérisé en ce que** les éléments d'identification (3) sont réalisés sous forme de marquage.

5. Agencement de tube selon l'une quelconque des revendications précédentes, **caractérisé en ce que** les éléments d'identification (3) sont réalisés sous forme d'élément accumulateur.

6. Agencement de tube selon l'une quelconque des revendications précédentes, **caractérisé en ce que** les éléments d'identification (3) sont réalisés sous forme de code à barres.

7. Agencement de tube selon l'une quelconque des revendications précédentes, **caractérisé en ce que** les éléments d'identification (3) présentent une couleur différente de celle de la couche (10) de l'agencement de tube (1).

8. Agencement de tube selon l'une quelconque des revendications précédentes, **caractérisé en ce que** les éléments d'identification (3) sont connectés d'une seule pièce à la couche (10) de l'agencement de tube (1).

9. Agencement de tube selon l'une quelconque des revendications précédentes, **caractérisé en ce que** les éléments d'identification (3) sont collés à la couche (10) de l'agencement de tube (1).

10. Agencement de tube selon l'une quelconque des revendications précédentes, **caractérisé en ce que** l'agencement de tube (1) est réalisé sous forme de tube.

11. Agencement de tube selon l'une quelconque des revendications précédentes, **caractérisé en ce que** l'agencement de tube (1) est réalisé sous forme de pièce moulée tubulaire.

12. Agencement de tube selon l'une quelconque des revendications précédentes, **caractérisé en ce que** l'agencement de tube (1) est réalisé sous forme de composant formant gaine.
